(19) Europäisches Patentamt
European Patent Office
Office européen des brevets

(11) **EP 1 979 724 B1**

(12) **EUROPÄISCHE PATENTSCHRIFT**

(45) Veröffentlichungstag und Bekanntmachung des Hinweises auf die Patenterteilung:
**21.03.2012 Patentblatt 2012/12**

(21) Anmeldenummer: **07702640.9**

(22) Anmeldetag: **10.01.2007**

(51) Int Cl.:
*G01H 1/00* $^{(2006.01)}$        *G01M 13/02* $^{(2006.01)}$

(86) Internationale Anmeldenummer:
**PCT/EP2007/000135**

(87) Internationale Veröffentlichungsnummer:
**WO 2007/090492 (16.08.2007 Gazette 2007/33)**

(54) **VERFAHREN UND EINRICHTUNG ZUR DETEKTION EINER IMPULSARTIGEN MECHANISCHEN EINWIRKUNG AUF EIN ANLAGENTEIL**

METHOD AND DEVICE FOR DETECTING A PULSED MECHANICAL EFFECT ON A PLANT COMPONENT

PROCÉDÉ ET DISPOSITIF PERMETTANT DE DÉTECTER UN EFFET MÉCANIQUE IMPULSIONNEL SUR UNE PARTIE D'UNE INSTALLATION

(84) Benannte Vertragsstaaten:
**AT BE BG CH CY CZ DE DK EE ES FI FR GB GR HU IE IS IT LI LT LU LV MC NL PL PT RO SE SI SK TR**

(30) Priorität: **03.02.2006 DE 102006004947**

(43) Veröffentlichungstag der Anmeldung:
**15.10.2008 Patentblatt 2008/42**

(73) Patentinhaber: **AREVA NP GmbH**
**91052 Erlangen (DE)**

(72) Erfinder:
• **BECHTOLD, Bela**
**91096 Möhrendorf (DE)**
• **JAX, Peter**
**91056 Erlangen (DE)**
• **OCELIK, Vojtech**
**91054 Erlangen (DE)**
• **ZACH, Jan**
**91058 Erlangen (DE)**

(74) Vertreter: **Mörtel, Alfred**
**Mörtel & Höfner**
**Äussere Sulzbacher Strasse 159/161**
**90491 Nürnberg (DE)**

(56) Entgegenhaltungen:
**WO-A-03/071243**

**Beschreibung**

Die Erfindung bezieht sich auf ein Verfahren und auf eine Einrichtung zur Detektion einer impulsartigen mechanischen Einwirkung auf ein Anlagenteil.

In einer Vielzahl von Anwendungsfällen ist es erforderlich, den ordnungsgemäßen Betrieb eines Anlagenteils, beispielsweise einer Rohrleitung oder eines Behälters der chemischen Verfahrenstechnik oder einer Strömungsmaschine, fortwährend zu überwachen, um Störungen rechtzeitig zu erkennen und schwerwiegende Folgeschäden zu vermeiden. Für eine derartige Überwachung sind im Stand der Technik eine Vielzahl von Verfahren bekannt.

In der EP 0 765 466 B1 ist beispielsweise vorgeschlagen worden, die Überwachung der Schwingungen von Turbinenschaufeln mit Hilfe von Mikrowellen vorzunehmen, die auf die Turbinenschaufeln gerichtet sind. Aus der Modulation der an den Turbinenschaufeln reflektierten Mikrowellen kann auf den Schweingungszustand der Turbine geschlossen werden.

Bei dem aus der DE 198 57 552 A1 bekannten Verfahren wird der Bruch der Welle einer Turbine durch eine Messung der Drehfrequenzen an den Enden der Welle erfasst.

In der DE-198 43 615 C2 wird vorgeschlagen, die Diagnose des Zustandes eines Verbrennungsantriebes mit Hilfe einer Analyse des Frequenzspektrums der Messsignale vorzunehmen, die mit Hilfe eines im Lufteinlass- oder Abgasbereiches angeordneten Schallaufnehmers aufgenommen werden.

In der DE 197 27 114 C2 werden zur Überwachung einer Maschine anstelle des Luftschalls die ihr auftretenden Körperschallsignale erfasst. Auch bei diesem bekannten Verfahren werden die jeweils ermittelten Frequenzspektren der vom Körperschallaufnehmer erfassten Messsignale analysiert.

Auch bei dem in der DE 195 45 008 C2 offenbarten Verfahren wird während des Betriebs der Maschine das Frequenzspektrum des von einem Überwachungssensor, beispielsweise einem Be-schleunigungsaufnehmer erfassten Messsignals analysiert und mit einem Referenzfrequenzspektrum verglichen.

Um das Eindringen von Fremdteilen in eine Gasturbine feststellen zu können, ist in der US 4,888,948 am Einlass der Turbine ein Sensor angeordnet, mit dem eine von den Fremdkörpern induzierte elektrische Ladung erfasst wird.

Bei dem aus der DD 224 934 A1 bekannten Verfahren zum Ermitteln einer Zustandsänderung einer Maschine mit rotierenden Teilen werden fortlaufend Messwerte eines den Betriebszustand beschreibenden Signales erfasst und mit adaptiven Schwellwerten verglichen. Zur Bestimmung dieser Schwellwerte werden Quantilwerte der Wahrscheinlichkeitsverteilung der Messwerte rekursiv und adaptiv erfasst. Aus der Anzahl und Höhe der Schwellwertüberschreitungen werden Kenngrößen für den Zustand der Maschine ermittelt.

Ein besonderes Problem stellen von der Strömung mitgeführte und auf das Anlagenteil auftreffende lose Teile dar, die nur eine impulsartige, kurzzeitige Einwirkung verursachen, deren sicherer Nachweis entsprechend problematisch ist.

Derartige Probleme können beispielsweise bei Gasturbinen auftreten, deren Brennkammer zum Schutz vor Überhitzung mit Keramikkacheln ausgekleidet ist. Diese Keramikkacheln werden durch in der Brennkammer auftretende Druckwechselschwankungen dynamisch hoch beansprucht. Dabei kann es passieren, dass Teilstücke der Kacheln an den jeweiligen Halterungen ausbrechen, von der Strömung des Abgases mitgerissen werden und auf die erste Leitschaufelreihe der Gasturbine aufschlagen. Dies kann zu einer Beschädigung der Beschichtung der Leitschaufeln und zu einer Zerstörung der dahinter angeordneten Laufschaufeln führen. Außerdem besteht die Gefahr, dass sich eine durch das Ausbrechen von Teilstücken bereits beschädigte Kachel vollständig aus den Halterungen löst und zu einem entsprechend massiven Schaden an der Gasturbine führen kann. In diesem Fall indiziert das Auftreffen kleiner loser Teile oder einer einzelnen Kachel einen bevorstehenden Totalabriss einer Kachel bzw. mehrerer Kacheln, so dass rechtzeitiges Abschalten der Gasturbine und rechtzeitiger Austausch der beschädigten Kacheln einen größeren Schaden verhindert.

Zur Überwachung derartiger Aufschläge auf ein Anlagenteil ist es aus der WO 01/75272 A2 grundsätzlich bekannt, mit Hilfe geeigneter Sensoren den Aufschlag durch einen dabei entstehenden Körperschall zu erfassen. Hierbei tritt aber insbesondere bei Gasturbinen das Problem auf, dass die normalen Betriebsgeräusche so hoch sind, dass auch der durch den Aufschlag einer gesamten Kachel auf die Leitschaufel der Gasturbine am Sensor erzeugte Signalanteil kleiner ist als der durch die normalen Betriebsgeräusche erzeugte Untergrund, so dass insbesondere das Auftreffen kleinerer Teilstücke durch eine alleinige Überwachung der Amplituden der Körperschallsignale nicht detek-tiert werden kann. Zur Verbesserung des Signal- Rauschverhältnisses wird deshalb in dieser Druckschrift vorgeschlagen, das von einem Messwertaufnehmer aufgenommene Messsignal einer Band- oder Hochpassfilterung zu unterziehen, um auf diese Weise die beim normalen Betrieb der Turbine entstehenden Körperschallsignale zu eliminieren. Diese Maßnahmen reichen jedoch nicht aus, um bei hohen und zeitlich variierenden Hintergrundgeräuschen ein impulsartiges Ereignis sicher zu identifizieren.

Aus der WO 03/071243 A1 ist ein Verfahren zur Detektion einer impulsartigen mechanischen Einwirkung auf ein Anlagenteil bekannt, bei dem das erfasste Körperschallsignal einer gefensterten Fouriertransformation unterzogen wird. Aus einer Vielzahl der auf diese Weise ermittelten Fourierspektren wird mit den dort näher erläuterten Algorithmen eine Bewertungsfunktion K abgeleitet, die das Auftreten einer impulsartigen mechanischen Einwirkung auf das Anlagenteil anzeigt. Der in dieser Druckschrift angegebene Algorithmus zur Ableitung der Bewertungsfunktion K ermöglicht die präzise Erkennung eines dem verrauschten Messsignal überlagerten, auf eine impulsartige Einwirkung zurückzuführenden Signalanteils.

Wesentlicher Schritt in diesem vorgeschlagenen Auswerte-Algorithmus ist, dass für jedes Zeitfenster und jede der vorgegebenen Frequenzen die Abweichung des Betrages A der Fouriertransformierten von einem Betragsmittelwert $\overline{A}$ bestimmt wird. Dabei kommt der Bildung des Betragsmittelwertes $\overline{A}$ eine entscheidende Bedeutung zu, da es in Anlagenteilen, insbesondere bei einer Turbine, zufällige Zustandsänderungen geben kann, in denen das Anlagenteil von einem Betriebszustand in einen anderen wechselt und das Betriebs- oder Hintergrundgeräusch sehr schnell auf ein deutlich höheres Niveau ansteigen kann. Eine solche Zustandsänderung ist bei einer Turbine beispielsweise das Einsetzen eines sogenannten Brummens. Dieses wird verursacht durch die Anordnung der Flammen in einem Ringraum, die dazu führen kann, dass die gesamte Brennkammer zu Resonanzschwingungen angeregt wird, wobei insbesondere die Schwingungsmoden in Umfangsrichtung bevorzugt werden. Diese Resonanzerscheinungen können zum Teil abrupt abbrechen und ebenso abrupt wieder einsetzen. Wird dem in der WO 03/071243 offenbarten Verfahren, wobei der Inhalt der WO 03/071243 ausdrücklich Bestandteil der vorliegenden Patentanmeldung ist, ein gleitender Betragsmittelwert zugrunde gelegt, der durch eine einfache Mittelwertbildung in Form eines arithmetischen Mittels aus einer Anzahl vorhergehender Beträge gebildet ist, hat sich gezeigt, dass diese Geräuschschwankungen zu Fehlauslösungen führen können. Um solche Fehlauslösungen zu vermeiden, wurde deshalb in der Praxis während des Brummens der Turbine, das anhand einer Analyse der Signalcharakteristik erkannt wird, eine Überwachung auf impulsartige mechanische Einwirkungen unterdrückt.

Auch in anderen Anlagenteilen, beispielsweise in einem Reaktordruckbehälter eines Kernkraftwerkes, sind den kontinuierlichen Grundgeräuschen (Fluidströmung, Pumpengeräusch) betrieblich bedingte kurzzeitige Betriebsgeräusche überlagert, wie sie beispielsweise durch zulässige Änderungen der Betriebsbedingungen und gewollte Eingriffe in den Betriebsablauf (Betätigen von Ventilen, Fahren von Steuerstäben) hervorgerufen sind.

Der Erfindung liegt nun die Aufgabe zugrunde, ein Verfahren zur Detektion einer impulsartigen mechanischen Einwirkung auf ein Anlagenteil anzugeben, das gegenüber dem aus der WO 03/071243 bekannten Verfahren weiter verbessert ist. Außerdem liegt der Erfindung die Aufgabe zugrunde, eine Einrichtung zur Durchführung des Verfahrens anzugeben.

Hinsichtlich des Verfahrens wird die genannte Aufgabe gemäß der Erfindung gelöst mit einem Verfahren mit den Merkmalen des Patentanspruches 1. Bei dem Verfahren zur Detektion einer impulsartigen mechanischen Einwirkung auf ein Anlagenteil, wird ein im Anlagenteil vorhandenes Betriebsgeräusch kontinuierlich mit einem am Anlagenteil angeordneten Sensor erfasst und von diesem in ein Messsignal umgewandelt, das mit den folgenden Verfahrensschritten verarbeitet wird:

a) In Zeitschritten zeitlich aufeinanderfolgenden Zeitfenstern, wird mit vorgegebenen Parametern einer mathematischen Transformationsvorschrift der Betrag ($A(f_i,t_j)$) der Transformierten des Messsignals (M) ermittelt,
b) für jeden Zeitschritt ($\delta t$) und jeden der vorgegebenen Parameter ($f_i$) wird die Abweichung des Betrages ($A(f_i,t_j)$) von einem Betragsmittelwert ($\overline{A}(f_i,t)$) bestimmt,
c) aus den für jeden der vorgegebenen Parameter ($f_i$) bestimmten Abweichungen wird für jeden Zeitschritt ($\delta t$) eine Bewertungsfunktion ($K(t)$) abgeleitet,
d) die Bewertungsfunktion ($K(t)$) wird mit einem Schwellwert ($K_o$) verglichen und das Überschreiten des Schwellwerts ($K_o$) als Indiz für das Vorliegen eines die mechanische Einwirkung anzeigenden impulsartigen Signalanteiles herangezogen,
e) der Betragsmittelwert ($\overline{A}(f_i,t_j)$) als Funktion der Zeit (t) gleitend aus einem Datensatz ($\underline{A}(f_i, t)$) mit M Beträgen ($A(f_i, t_m)$) mit Hilfe der Beziehung

$$\overline{A}(f_i, t) = (Q_\alpha(f_i, t) + Q_{1-\alpha}(f_i, t))/2$$

bestimmt wird, wobei $Q_\alpha$ und $Q_{1-\alpha}$ das $\alpha$- bzw. $(1-\alpha)$-Quantil der in einem Zeitabschnitt (T) jeweils bestimmten Beträge ($A(f_i,t_m)$) ist, und wobei $t_m=t+m\delta t$ und m eine ganze Zahl ist.

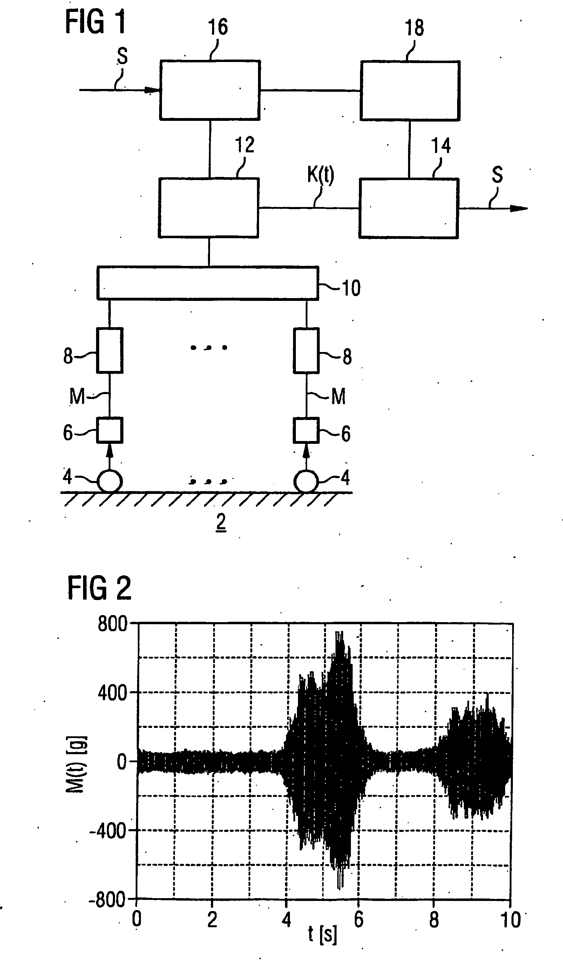

Die Erfindung beruht dabei auf der Erkenntnis, dass eine einfache numerische Mittelwertbildung des Betrages A dazu führen kann, dass ein schneller Übergang des Betriebsbestandes in einen Zustand mit einem höheren Geräuschpegel fehlerhaft als Burst-Signal, d.h. ein aufgrund einer impulsartigen Einwirkung auf das Anlagenteil entstehendes Signal, interpretiert wird. Ein solches Signal ist im Diagramm gemäß Fig. 2 dargestellt. In diesem Diagramm ist das an einer Turbine mit einem Körperschallaufnehmer aufgenommene Messsignal M gegen die Zeit t aufgetragen. In der Figur ist zu erkennen, dass zu den Zeitpunkten t = 4 s und t = 8 s abrupt ein Brummen einsetzt, das jeweils etwa 2 s andauert.

In Fig. 3 ist nun in einem Diagramm die auf der Grundlage des in der WO 03/071243 A1 aus dem Messsignal M gemäß Fig. 2 abgeleitete Bewertungsfunktion K(t) ebenfalls als Funktion der Zeit dargestellt. Dieser Figur ist nun zu entnehmen, dass die Bewertungsfunktion K(t) zumindest während des Zeitraums des Brummens der Turbine zwischen t = 4 s und t = 6 s signifikant ansteigt. Dieser Anstieg würde dann als Burst-Signal für das Auftreffen eines großen Anlagenteils fehlinterpretiert werden. Dabei wurde der Berechnung der Bewertungsfunktion K(t) eine verbesserte iterative Berechnungsmethode zugrundegelegt, bei der der Betragsmittelwert $\overline{A}$ und eine mittlere quadratische Abweichung (Varianz) für jede Frequenz $f_i$ gleitend mit Hilfe der Beziehungen

$$\overline{A}(f_i, t+\delta t) = k\overline{A}(f_i, t) + (1-k)A(f_i, t+\delta t)$$

und

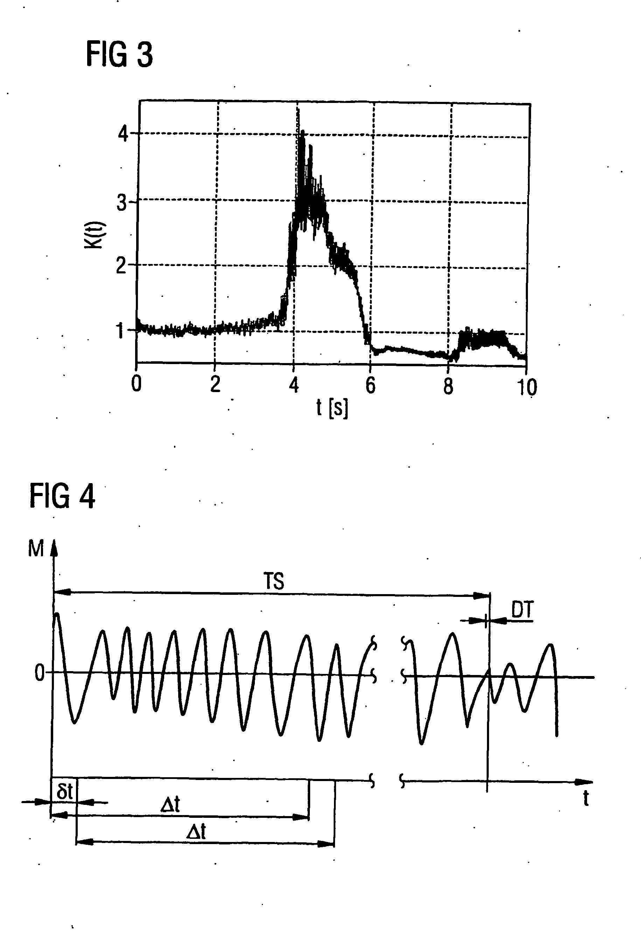

varA$(f_i, t+\delta t)$ = kvarA$(f_i, t)$ + (1-k) (A$(f_i, t+\delta t)$ - $\overline{A}(f_i, t))^2$ bestimmt werden, wobei $\delta t$ der Zeitschritt ist, in dem jeweils für ein Zeitfenster $\Delta t$ der Betrag A bestimmt wird. Durch Auswahl des Parameters k wird nun bestimmt, in welchem Ausmaß ein neu hinzu kommender Betrag A$(f_i, t+\delta t)$ Einfluss auf den neu berech-neten Betragsmittelwert $\overline{A}(f_i, t+\delta t)$hat. Dieser Ansatz entspricht einer exponentiell gewichteten Mittelwertbildung, wobei k die Adaptionsgeschwindigkeit bestimmt. Bei einer sprunghaften Änderung des Betrages A$(f_i, t)$ von einem konstanten Ausgangswert auf einen ebenfalls konstanten neuen Wert ergäbe sich dann eine annähernd exponentielle Anpassung des neuen Betragsmittelwertes $\overline{A}$ auf den neuen, aktuell vorliegenden Betrag A mit einer Zeitkonstante $\tau = \delta t/(1-k)$. Für k = 0,999 und $\delta t \approx 3,2$ ms ergibt sich eine Zeitkonstante $\tau$ von 3,2 s. Wie der Fig. 3 zu entnehmen ist, ist auch ein in dieser Weise verbesserter Auswerte-Algorithmus nicht in der Lage, sich auf schnelle Änderungen des Betriebsgeräusches optimal einzustellen, d.h. den jeweils gültigen Betragsmittelwert $\overline{A}(f_i, t)$ und dessen Standardabweichung A$(f_i, t)$ des Betriebsgeräusches bei schnellen Änderungen genau genug zu bestimmen. Zwar ist es grundsätzlich möglich, durch Verringerung der Zeitkonstante $\tau$, also durch Verringerung des Parameters k, den Betragsmittelwert $\overline{A}(f_i, t)$ schneller an die veränderte Betriebssituation anzupassen. Dies hat jedoch den Nachteil, dass ein überlagertes Burst-Signal nicht mehr mit ausreichender Empfindlichkeit registriert werden kann. Um Burst-Signale, wie sie durch Aufprall von losen Teilen verursacht werden, von diesen überlagerten Untergrundgeräuschen der Maschine unterscheiden zu können, ist die Bestimmung eines Mittelwertes erforderlich, dem kein Burst-Signal überlagert ist oder bei dem ein gegebenenfalls überlagertes Burst-Signal durch eine sehr große Zeitkonstante allenfalls einen vernachlässigbaren Einfluss auf den Betragsmittelwert $\overline{A}(f_i, t)$ hat.

Die zweitgenannte Aufgabe wird gemäß der Erfindung mit einer Einrichtung mit den Merkmalen des Patentanspruches 6 gelöst, deren Vorteile den zu Patentanspruch 1 angegebenen Vorteilen entsprechen.

Vorteilhafte Ausgestaltungen des Verfahrens und der Einrichtung sind in den jeweiligen Unteransprüchen angegeben.

Zur weiteren Erläuterung der Erfindung wird auf die Zeichnung verwiesen. Es zeigen:

Fig. 1    ein Ausführungsbeispiel für eine Einrichtung gemäß der Erfindung in einer schematischen Prinzipskizze,

Fig. 2    ein Diagramm, in dem das von einem Messwertaufnehmer erfasste Betriebsgeräusch (Messsignal M) einer Turbine gegen die Zeit t aufgetragen ist,

Fig. 3    ein Diagramm, in dem die aus dem Messsignal M der Fig. 2 gemäß einem in der WO 03/071243 dargestellten Auswerte-algorithmus abgeleitete Bewertungsfunktion K gegen die Zeit t aufgetragen ist,

Fig. 4    ein vereinfachtes Diagramm, in dem das Messsignal M in zeitlich hoher Auflösung gegen die Zeit t aufgetragen ist,

Fig. 5    ein Diagramm, in dem der aus dem Messsignal M durch schnelle Fouriertransformation ermittelte Betrag A des Frequenzspektrums bei einer vorgegebenen Frequenz $f_i$ gegen die Zeit t aufgetragen ist,

Fig.    6 ein Diagramm, in dem der gleitende zeitliche Mittelwert $\overline{A}$ der Beträge A des Spektrums bei einer vorgegebenen Frequenz $f_i$ ebenfalls gegen die Zeit t aufgetragen ist,

Fig. 7    ein Diagramm, in dem die aus dem Messsignal der Fig. 2 mit einem Verfahren gemäß der Erfindung abgeleitete Bewertungsfunktion K gegen die Zeit t aufgetragen ist,

Fig. 8    ein Diagramm, in dem ein an einer Turbine aufgenommenes Messsignal M gegen die Zeit t aufgetragen ist, dem ein durch ein Aufprall verursachter Burst überlagert ist,

Fig. 9    ein Diagramm, in dem die aus diesem Messsignal ermittelte Bewertungsfunktion K ebenfalls gegen die Zeit aufgetragen ist.

Gemäß Fig. 1 sind an einem Anlagenteil 2, beispielsweise eine Gasturbine, eine Mehrzahl von Messwertaufnehmern oder Sensoren 4, insbesondere piezoelektrische Beschleunigungsaufnehmer, angeordnet, die das im Anlagenteil 2 vorhandene und sich in Form von Körperschall ausbreitende Betriebsgeräusch in mehreren Messkanälen kontinuierlich erfassen. Die Sensoren 4 wandeln die Körperschallsignale jeweils in ein elektrisches Messsignal um, das in einem Vorverstärker 6 verstärkt und an einen Analog-Digital-Wandler 8 weitergeleitet wird, der an einen digitalen Speicher 10 angeschlossen ist. Das jeweils anstehende verstärkte Messsignal M wird so digitalisiert, zwischengespeichert und zur weiteren Bearbeitung an eine Recheneinrichtung 12 weiterleitet, in der der erfindungsgemäße Auswertealgorithmus implementiert ist.

Die Recheneinrichtung 12 enthält für jeden Messkanal einen Prozessor für eine schnelle Berechnung einer Transformierten der vom Analog/Digital-Wandler 8 weitergegebenen Daten sowie einen Ringspeicher zum Speichern einer Anzahl L der durch die Transformation ermittelten Transformierten. Bei dieser Transformation handelt es sich im Beispiel um eine schnelle gefensterte Fouriertransformation FFT. Als Transformation einer mathematischen Funktion (das Messsignal M(t)) im Sinne der vorliegenden Erfindung ist jede mathematische Operation zu verstehen, mit der es möglich ist, diese Funktion mit einem vollständigen Satz orthogonaler Basisfunktionen darzustellen. Diese orthogonalen Basisfunktionen können - wie dies bei der Fouriertransformation der Fall ist - durch die Exponentialfunktion $e^{-i\omega t}$ gebildet sein. Grundsätzlich können jedoch auch andere periodische Funktionen als orthogonales Basissystem verwendet werden. Mit diesen Transformationen werden diskrete Transformierte mit einem vorbestimmten Satz von diskreten Parametern berechnet. Dies sind bei der Fouriertransformation fest vorgegebene Frequenzen $f_i = \omega_i/2\pi$, die entsprechend dem jeweiligen Anlagenteil ausgewählt sind, wie dies beispielsweise für eine Turbine in der WO 03/071243 näher dargestellt ist.

Aus den in der Recheneinrichtung 12 ermittelten diskreten Transformierten wird für jeden Meßkanal nach einem in der Recheneinrichtung 12 implementierten und nachfolgend näher erläuterten Algorithmus eine von der Zeit t abhängige Bewertungsfunktion K(t) ermittelt, die in einer Vergleichseinrichtung 14 mit einem vorgegebenen Schwellwert $K_0$ verglichen wird. Ein Überschreiten des Schwellwertes $K_0$ (Alarmschwelle) dient als Indiz für das Vorliegen eines durch eine transiente mechanische Einwirkung verursachten impulsartigen Signalanteiles und generiert ein entsprechendes Triggersignal S. Das Triggersignal S wird einem Transientenrekorder 16 zugeführt, in dem die Messdaten (Messsignale $M_s$) für einen Zeitbereich von beispielsweise 10 s aufgezeichnet und an einen Auswerterechner 18 weitergegeben werden, um mit diesem eine nachträgliche Analyse durchführen zu können.

Fig. 2 zeigt das jeweils von einem Sensor 4 an einer Turbine erfasste Messsignal M für einen Zeitraum von etwa 10 s. Deutlich ist zu erkennen, dass die Turbine zu den Zeitpunkten t = 4 s und t = 6 s abrupt zu brummen beginnt.

In Fig. 4 ist anhand einer Prinzipskizze der erste Schritt der in der Recheneinheit 12 (Fig. 1) implementierten Vorgehensweise erläutert. Das mit hoher Taktrate (typisch 80 - 100 kHz, zugehöriger Zeitabstand DT etwa 0,01 - 0,0125 ms, (in der Figur vergrößert eingezeichnet) digitalisierte Messsignal M (in der Figur aus Gründen der Übersichtlichkeit analog dargestellt) wird jeweils für einen Zeitbereich TS (typisch etwa 10 s) in einem gespeichert und entsprechend der Taktrate aktualisiert. In einem Zeitfenster $\Delta t$ innerhalb dieses Zeitbereiches TS wird das digitalisierte Messsignal M einer schnellen diskreten Fouriertransformation unterzogen. Anschließend wird das Zeitfenster $\Delta t$ um einen Zeitschritt $\delta t$ verschoben aktualisiert und in einem überlappenden Zeitfenster $\Delta t$ gleicher Länge erneut eine Fouriertransformation durchgeführt. Im Ausführungsbeispiel beträgt $\Delta t$ = 25,6 ms und $\delta t$ = 3,2 ms. Auf diese Weise werden für jedes Zeitfenster $\Delta t$ und für eine endliche Anzahl diskreter Frequenzen $f_i$ zeitabhängige Beträge $A(f_i,t)$ ermit-telt.

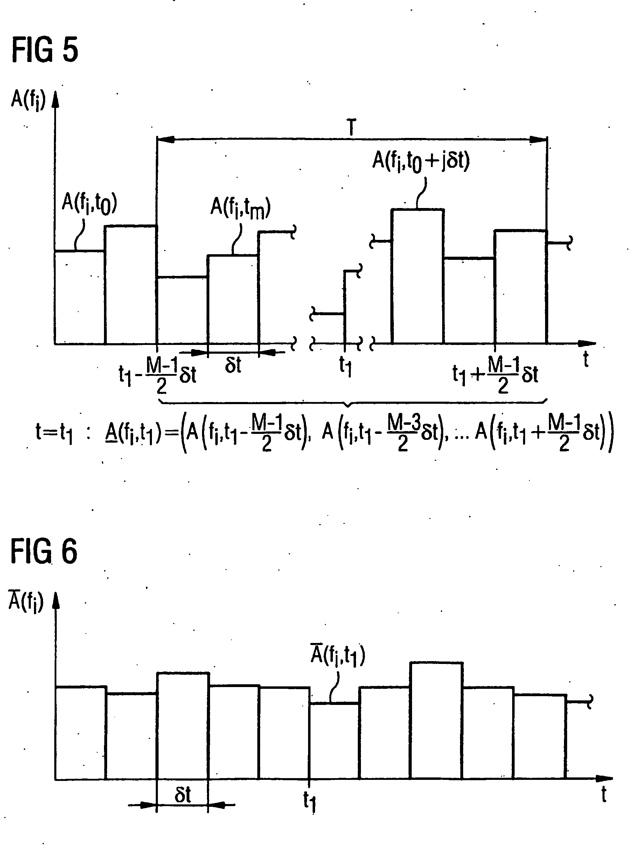

In Fig. 5 ist nun der zeitliche Verlauf des Betrages A bei einer vorgegebenen Frequenz $f_i$ veranschaulicht. Dieser Fig. ist zu entnehmen, das der Betrag A bei dieser vorgegebenen Frequenz $f_i$ zeitlich variiert. Das in der Fig. eingetragene Zeitintervall ist der Zeitschritt $\delta t$ in dem die schnelle Fouriertransformation aktualisiert wird. Gemäß der Erfindung wird nun für eine Vielzahl N vorgegebener Frequenzen $f_i$ oder Frequenzbereiche und in zeitlich aufeinander folgenden Zeit-schritten $\delta t$ für zeitlich überlappende Zeitfenster $\Delta t$ der zugehörige Betragswert $A(f_i,t_j)$ mit $t_j = t_0 + j\delta t$ bestimmt, wobei j eine natürliche Zahl ist.

Aus den Betragswerten $A(f_i,t)$ wird nun ein Betragsmittelwert $\overline{A}(f_i,t)$ gebildet. Bei diesem Betragsmittelwert $\overline{A}(f_i,t)$ handelt es sich um einen zeitlich gleitenden, der in Zeitschritten $\delta t$ als Funktion der Zeit t gleitend aus einem aus M Beträgen $A(f_i,t_m)$ eines Zeitabschnittes T zusammengesetzten Datensatz $\underline{A}(f_i,t)$ mit Hilfe der Beziehung

$$\overline{A}(f_i, t) = (Q_\alpha(f_i, t) + Q_{1-\alpha}(f_i, t))/2$$

bestimmt wird, wobei $Q_\alpha$ und $Q_{1-\alpha}$ das $\alpha$- bzw. $(1-\alpha)$-Quantil der in einem Zeitabschnitt T jeweils bestimmten Beträge $A(f_i, t_m)$ mit $t_m = t + m\delta t$, und m eine ganze Zahl sind. Hierzu werden die diesem, beispielsweise symmetrisch zum Zeitpunkt t angeordneten Zeitabschnitt T (in diesem Fall gilt - $\dfrac{M-1}{2} \leq m \leq \dfrac{M-1}{2}$ und M ungerade) und jeweils den dem Zeitpunkt t zugeordneten Datensatz $\underline{A}(f_i, t)$ bildenden zugehörigen Beträge $A(f_i, t_m)$ nach dem Betragswert in einer Reihe sortiert. Das $\alpha$- bzw. $(1-\alpha)$-Quantil ist dann derjenige Betragswert, der sich auf der Position $\alpha M$ bzw. $(1-\alpha)M$ der Reihe befindet. In der Praxis werden für $\alpha$ Werte zwischen $0,7 \leq \alpha \leq 0,8$, vorzugsweise $\alpha = 0,75$ angesetzt. Ein mit Hilfe dieses Berechnungsverfahrens gewonnener Betragsmittelwert $\overline{A}(f_i, t)$ ist in Fig. 6 veranschaulicht.

Mit Hilfe des $\alpha$- und des $(1-\alpha)$-Quantils $Q_\alpha$ bzw. $Q_{1-\alpha}$ wird nun eine mittlere Abweichung $s(f_i, t)$ der Beträge $A(f_i, t_n)$ vom Betragsmittelwert $\overline{A}(f_i, t)$ mit Hilfe der Beziehung

$$s(f_i, t) = \sqrt{\frac{Q_\alpha(f_i, t) - Q_{1-\alpha}(f_i, t)}{2q_{1-\alpha}}}$$

berechnet, wobei $q_{1-\alpha}$ das $(1-\alpha)$-Quantil der normierten Gauß- oder Normalverteilung ist.

Mit Hilfe dieses Berechnungsverfahrens (Quantilenverfahren) werden somit Mittelwert und Abweichung eines Datensatzes ohne Berücksichtigung der Werte berechnet, die sich außerhalb der durch $\alpha$ und $(1-\alpha)$ definierten Bereiche befinden. Dies bedeutet, dass deutlich höhere Beträge, wie sie durch ein überlagertes Burst-Signal zusätzlich verstärkt auftreten können, nicht berücksichtigt werden und somit auch das Ergebnis nicht verfälschen können. Mit dieser Methode kann ein deutlich kürzerer Zeitabschnitt, beispielsweise ein aus M = 100 Betragswerten $A(f_i, t_j)$ bestehender Datensatz $\underline{A}(f_i, t)$ mit einer Länge des Zeitabschnitts T = 320 ms bei einem Zeitschritt $\delta t = 3,2$ ms bei gleicher Güte im Ergebnis der Berechnung gewählt werden. Dies hat zur Folge, dass sich der Betragsmittelwert $\overline{A}(f_i, t)$ schnellen Änderungen im Betriebsuntergrund anpasst, so dass diese zu keiner Verfälschung der normierten Spektren führen oder Fehlanzeigen in der Überwachung vortäuschen können. Bei einer solchen Vorgehensweise ist es möglich, dass auch während des Brummens der Gasturbine, d.h. wenn durch Resonanzschwingungen im Brennraum deutlich höhere Untergrundgeräusche sehr abrupt, beispielsweise mit einer Zeitkonstante von etwa 0,5 s bei einem Amplitudenanstieg um den Faktor 5 und mehr auftreten, das Aufschlagen loser Teile erkannt wird.

Mit Hilfe des vorstehenden berechneten Betragsmittelwertes $\overline{A}(f_i, t)$ und der mittleren Abweichung $s(f_i, t)$ kann nun in einem weiteren Rechenschritt auf der Grundlage des Quantilenverfahrens ein verbesserter Betragsmittelwert $\overline{A}_{opt}(f_i, t)$ ermittelt werden, indem aus dem jeweils vorliegenden Datensatz $\underline{A}(f_i, t)$ diejenigen Beträge $A(f_i, t_m)$ eliminiert werden, die signifikant größer als der vorstehend berechnete Betragsmittelwert $A(f_i, t)$ sind. In der Praxis hat sich dabei als vorteilhaft herausgestellt, bei der Mittelwertberechnung diejenigen Beträge $A(f_i, t_m)$ zu eliminieren, die größer als $\overline{A}(f_i, t) + 3s(f_i, t)$ sind. Mit dem vollständigen Datensatz $\underline{A}(f_i, t)$ wird dann eine erneute Mittelwertberechnung mit Hilfe eines $\delta$- bzw. $(1-\delta)$-Quantils durchgeführt wird, wobei

$$\delta = \alpha \ (M - M_E)/M$$

gilt und $M_E$ die Anzahl der Beträge $A(f_i, t_m)$ ist, die größer als $\overline{A}(f_i, t) + 3s(f_i, t)$ sind. Alternativ hierzu ist es auch möglich und mathematisch identisch, mit einem um diese Beträge $A(f_i, t_m)$ reduzierten Datensatz erneut das $\alpha$- bzw. $(1-\alpha)$-Quantil zu bestimmen. Mit Hilfe dieser $\delta$- bzw. $(1-\delta)$-Quantile oder der mit dem reduzierten Datensatz gewonnenen $\alpha$- bzw. $(1-\alpha)$-Quantile wird nun entsprechend der vorstehend genannten Formel ein verbesserter Mittelwert $\overline{A}_{opt}(f_i, t)$ bzw. eine verbesserte mittlere Abweichung $s_{opt}(f_i, t)$ berechnet.

Mit den Betragsmittelwerten $\overline{A}(f_i, t)$ oder $\overline{A}_{opt}(f_i, t)$ und der mittleren Abweichung $s(f_i, t)$ oder $s_{opt}(f_i, t)$ wird nun für jede Frequenz eine normierte Abweichung $D(f_i, t)$ des Betrages A vom Betragsmittelwert $\overline{A}$ gemäß der nachfolgenden Gleichung berechnet.

$$D\ (f_i, t_m) =\ (A(f_i, t_m) - \overline{A}\ (f_i, t))/s(f_i, t)$$

oder

$$D\ (f_i, t_m) =\ (A(f_i, t_m) - \overline{A}_{opt}(f_i, t))/s_{opt}(f_i, t)$$

Zur Ermittlung des zum Zeitpunkt t gültigen Betragsmittelwertes $\overline{A}(f_i, t)$ und der zu diesem Zeitpunkt t gültigen mittleren Abweichung $s(f_i, t)$ werden die Beträge $A(f_i, t_m)$ von M Spektren ausgewertet. Mit anderen Worten: Sowohl der Betragsmittelwert $\overline{A}\ (f_i, t)$ oder $\overline{A}_{opt}(f_i, t)$ als auch die mittlere Abweichung $s(f_i, t)$ oder $s_{opt}\ (f_i, t)$ werden ständig mit Hilfe von M Transformationen aktualisiert. Diese Aktualisierung erfolgt in Zeitschritten $\delta t$. Der der Berechnung des neuen Betragsmittelwertes $\overline{A}(f_i, t+\delta t)$ oder $\overline{A}_{opt}(f_i, t+\delta t)$ und der neuen mittleren Abweichung $s(f_i, t+\delta t)$ oder $s_{opt}(f_i, t+\delta t)$ zugrunde-liegende Datensatz $\underline{A}(t+\delta t)$ wird dabei durch Streichung des ersten (ältesten) Betrages und Hinzufügen des neuesten Betrages gebildet. Dies sind bei symmetrisch zum Zeitpunkt t angeordnetem Zeitabschnitt T die Beträge

$$A(f_i, t - \frac{M-1}{2}\ \delta t)\ bzw.\ A(f_i, t + \frac{M-1}{2}\ \delta t).$$

In einer vorteilhaften Ausgestaltung wird die normierte Abweichung $D(t, f_i)$ zusätzlich in einem die Frequenz $f_i$ umgebenden, aus $2L+1$ Frequenzen bestehenden Frequenzbereich $f_{i-L}, f_{i-L+1}, \ldots f_{i+L}$ gemittelt und eine mittlere normierte Abweichung $\overline{D}(t, f_i)$ durch die Gleichung

$$\overline{D}\ (f_i, t)\ =\ \frac{1}{1+2L}\sum_{k=-L}^{k=+L}\ D(f_{i+k}, t)$$

bestimmt. Dieser zusätzliche Rechenschritt führt zu einer Reduzierung der Höhe und Schwankungsbreite der normierten Abweichung in den Bereichen, in denen nur Untergrundsignale vorliegen. Die Nutzsignal-Anteile werden durch das Mitteln im Frequenzbereich nicht merklich verändert, da sie immer konzentriert um benachbarte Frequenzlinien auftauchen. Durch diese Maßnahme erfolgt nochmals eine Verbesserung des Signal-. Untergrund-Verhältnisses um weitere 10 bis 15 dB.

Eine weitere Verbesserung des Signal-Untergrund-Verhältnisses wird erreicht, wenn zusätzlich ein Schwellenwert $D_o$ eingeführt wird und eine normierte Abweichung $\overline{D}_s(f_i, t)$ mit Hilfe der Beziehung $\overline{D}_s = D_0$ für $D < D_0$ und $\overline{D}_s = \overline{D}$ für $\overline{D} \geq D_0$ bestimmt wird.

Die auf diese Weise ermittelten normierten Abweichungen $D(f_i, t)$, $\overline{D}(f_i, t)$ oder $\overline{D}_s(f_i, t)$ werden quadriert und über alle diskreten Frequenzen $f_i$ summiert:

$$S(t) = \sum_{i=1}^{N} D\ (f_i, t)^2 /N \qquad\qquad (a)$$

$$S(t) = \sum_{i=1}^{N} \overline{D}\ (f_i, t)^2 /N \qquad\qquad (b)$$

oder

$$S(t) = \sum_{i=1}^{N} \overline{D}_s (f_i, t)^2 / N \qquad (c)$$

Aus dieser Summe S(t) wird nun eine Bewertungsfunktion K(t) durch Bildung der Wurzel abgeleitet:

$$K(t) = \sqrt{S(t)} \qquad (1)$$

Diese dient als Indikator für das Auftreten eines Aufschlags. Alternativ hierzu kann die Bewertungsfunktion auch die Differenz zwischen der Wurzel aus der Summe S(t) und einem gleitenden zeitlichen Mittelwert dieser Wurzel

$$\tilde{K}(t) = K(t) - \overline{K}(t) \qquad (2)$$

gebildet werden und als Kenngröße für das Auftreten eines Aufschlags dienen. Überschreitet K(t) oder $\tilde{K}(t)$ einen Schwellwert $K_0$ (Alarmschwelle), der bei Gasturbinen zwischen 1,5 und 2 beträgt, so stellt dies ein Indiz für den Aufprall eines losen Teiles dar.

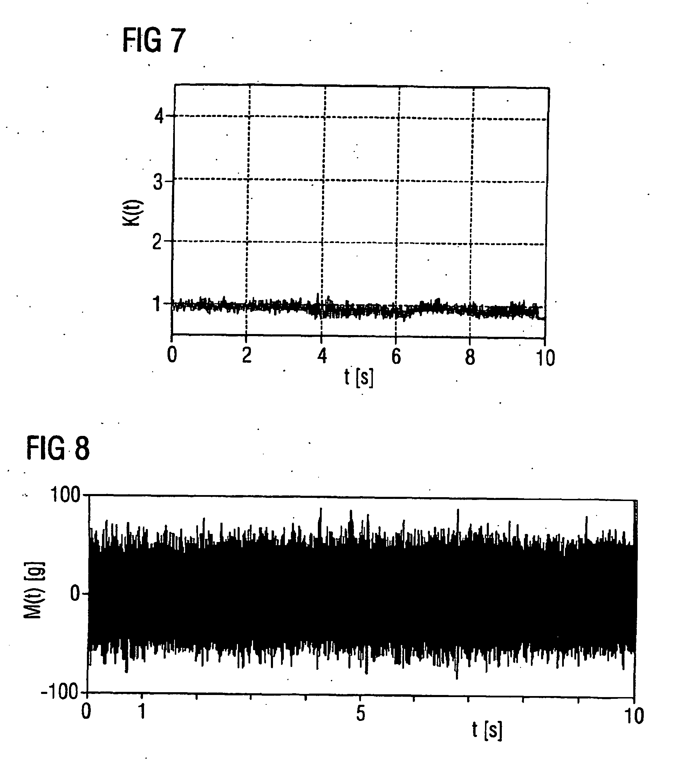

Die auf diese Weise und mit Hilfe der mittleren normierten Abweichung $\overline{D}_s$ aus dem Messsignal M der Fig. 2 gewonnene Bewertungsfunktion K(t) ist in Fig. 7 dargestellt. Deutlich ist nun zu erkennen, dass das Brummen der Turbine keinen Einfluss auf die Bewertungsfunktion K(t) hat.

Dennoch ist es mit dem erfindungsgemäßen Verfahren nach wie vor möglich, das Aufschlagen eines losen Anlagenteils sicher zu detektieren. Fig. 8 zeigt nun ein an einer Turbine gewonnenes reales Messsignal M(t), dem zu einem Zeitpunkt $t \approx 3,9$ s ein durch einen Aufprall verursachter Burst überlagert ist, der im Messsignal M nicht unmittelbar identifiziert werden kann.

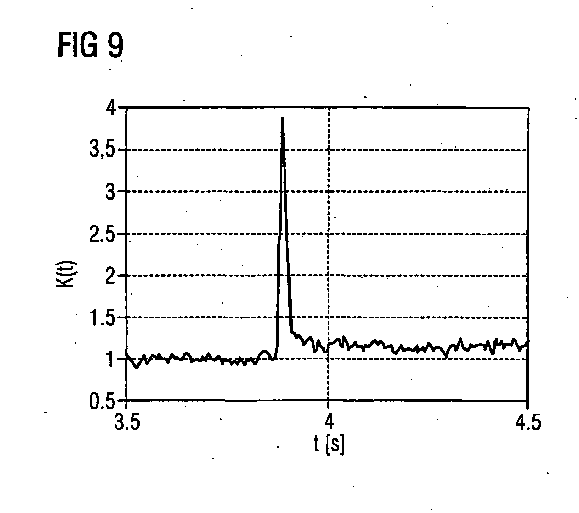

In Fig. 9 ist die aus dem Messsignal der Fig. 8 abgeleitete Bewertungsfunktion K in einem zeitlich vergrößerten Maßstabe dargestellt. Der Figur ist zu entnehmen, dass sich das stattfindende Ereignis (der Burst) durch einen deutlichen Anstieg der Bewertungsfunktion K bemerkbar macht.

Bezugszeichenliste

2      Anlagenteil

4      Sensor

6      Vorverstärker

8      Multiplexer

10      Analog/Digital-Wandler

12      Recheneinrichtung

14      Vergleichseinrichtung

16      Transientenrekorder

18      Auswerterechner

M      Messsignal

| | |
|---|---|
| K | Bewertungsfunktion |
| t | Zeit |
| $\Delta t$ | Zeitfenster |
| $\delta t$ | Zeitschritt |
| A | Betrag |
| $f_i$ | Frequenz |
| $\overline{A}$ | Betragsmittelwert |
| $\underline{A}$ | Datensatz |
| TS | Zeitbereich |
| DT | Zeitabstand |
| T | Zeitabschnitt |

**Patentansprüche**

1. Verfahren zur Detektion einer impulsartigen mechanischen Einwirkung auf ein Anlagenteil (2), bei dem ein im Anlagenteil (2) vorhandenes Betriebsgeräusch kontinuierlich mit einem am Anlagenteil (2) angeordneten Sensor (4) erfasst und von diesem in ein Messsignal (M) umgewandelt wird, **gekennzeichnet durch** folgende Verfahrensschritte:

   a) In zeitlich in Zeitschritten ($\delta t$) aufeinanderfolgenden Zeitfenstern ($\Delta t$) wird mit vorgegebenen Parametern ($f_i$) einer mathematischen Transformationsvorschrift der Betrag ($A(f_i,t_j)$) der Transformierten des Messsignals (M) ermit-telt,
   b) für jeden Zeitschritt ($\delta t$) und jeden der vorgegebenen Parameter ($f_i$) wird die Abweichung des Betrages ($A(f_i,t_j)$) von einem Betragsmittelwert ($\overline{A}(f_i,t)$) bestimmt,
   c) aus den für jeden der vorgegebenen Parameter ($f_i$) be-stimmten Abweichungen wird für jeden Zeitschritt ($\delta t$) eine Bewertungsfunktion ($K(t)$) abgeleitet,
   d) die Bewertungsfunktion ($K(t)$) wird mit einem Schwellwert ($K_o$) verglichen und das Überschreiten des Schwellwerts ($K_o$) als Indiz für das Vorliegen eines die mechanische Einwirkung anzeigenden impulsartigen Signalanteiles herangezogen,
   **dadurch** gekennzeichnet, dass
   e) der Betragsmittelwert ($\overline{A}(f_i,t_j)$) als Funktion der Zeit t gleitend aus einem Datensatz ($\underline{A}(f_i,t)$) mit M Beträgen $A(f_i,t_m)$ mit Hilfe der Beziehung

$$\overline{A}(f_i,t) = (Q_\alpha(f_i,t) + Q_{1-\alpha}(f_i,t))/2$$

   bestimmt wird, wobei $Q_\alpha$ und $Q_{1-\alpha}$ das $\alpha$- bzw. $(1-\alpha)$-Quantil der in einem Zeitabschnitt (T) jeweils bestimmten Beträge $A(f_i,t_m)$ ist, und wobei $t_m = t + m\delta t$ und m eine ganze Zahl ist.

2. Verfahren nach Anspruch 1, bei dem der Zeitabschnitt (T) symmetrisch zum Zeitpunkt t angeordnet ist.

3. Verfahren nach Anspruch 1 oder 2, bei dem aus dem Betragsmittelwert ($\overline{A}(f_i,t)$) ein verbesserter Betragsmittelwert ($\overline{A}_{opt}(f_i,t)$) berechnet wird, indem für die Bestimmung der Quantilen diejenigen Beträge ($A(f_i,t)$) aus dem Datensatz eliminiert werden, die den Betragsmittelwert ($\overline{A}$) um einen vorgegebenen Differenzwert überschreiten.

4. Verfahren nach Anspruch 1, 2 oder 3, bei dem für jeden der vorgegebenen Parameter ($f_i$) für eine Mehrzahl von

aufeinanderfolgenden Zeitfenstern ($\Delta t$) eine mittlere Abweichung ($s(f_i,t)$) der Beträge ($A(f_i,t_j)$) vom Betragsmittelwert ($\overline{A}(f_i,t)$) mit Hilfe der Beziehung

$$s(f_i, t) = \sqrt{\frac{Q_\alpha(f_i, t) - Q_{1-\alpha}(f_i, t)}{2q_{1-\alpha}}}$$

ermittelt wird, wobei $q_{1-\alpha}$ das $(1-\alpha)$-Quantil der normierten Normalverteilung ist, und mit dieser die normierte Abweichung der Beträge vom Betragsmittelwert ($\overline{A}(f_i,t)$) bestimmt und zur Berechnung der Bewertungsfunktion ($K(t)$) herangezogen wird.

5. Verfahren nach Anspruch 4 in Verbindung mit Anspruch 3, bei dem der vorgegebene Differenzwert ein Dreifaches der mittleren Abweichung (s) ist.

6. Verfahren nach einem der Ansprüche 4 oder 5, bei dem für jedes Zeitfenster ($\Delta t$) die Summe der Quadratwerte jeder normierten Abweichung über jeden der vorgegebenen Parameter gebildet wird, aus der die Bewertungsfunktion (K) abgeleitet wird.

7. Verfahren nach einem der vorhergehenden Ansprüche, bei dem die mathematische Transformationsvorschrift eine gefensterte Fouriertransformation ist und die Parameter Frequenzen ($f_i$) des Frequenzspektrums des Messsignales (M) sind.

8. Einrichtung zur Detektion einer impulsartigen mechanischen Einwirkung auf ein Anlagenteil (2), mit zumindest einem am Anlagenteil (2) angeordneten Sensor (4) zum kontinuierlichen Erfassen und Messen eines im Anlagenteil (2) vorhandenen Betriebsgeräusches, wobei die Einrichtung weiter eine Recheneinrichtung umfasst sowie einen dem Sensor (4) nachgeschalteten A/D-Wandler (10) zum Digitalisieren der vom Sensor (4) erfassten Messsignale (M) und zum Weiterleiten der digitalisierten Messsignale an die Recheneinrichtung (12), die zum Durchführen der folgenden Rechenschritte ausgebildet ist:

  a) In zeitlich in Zeitschritten ($\delta t$) aufeinanderfolgenden Zeitfenstern ($\Delta t$) wird mit vorgegebenen Parametern ($f_i$) einer mathematischen Transformationsvorschrift der Betrag ($A(f_i,t_j)$) der Transformierten des Messsignals (M) ermittelt,
  b) für jeden Zeitschritt ($\delta t$) und jeden der vorgegebenen Parameter ($f_i$) wird die Abweichung des Betrages ($A(f_i,t_j)$) von einem Betragsmittelwert ($\overline{A}(f_i,t)$) bestimmt,
  c) aus den für jeden der vorgegebenen Parameter ($f_i$) bestimmten Abweichungen wird für jeden Zeitschritt ($\delta t$) eine Bewertungsfunktion ($K(t)$) abgeleitet,
  d) die Bewertungsfunktion ($K(t)$) wird mit einem Schwellwert ($K_o$) verglichen und das Überschreiten des Schwellwerts ($K_o$) als Indiz für das Vorliegen eines die mechanische Einwirkung anzeigenden impulsartigen Signalanteiles herangezogen,
  **dadurch gekennzeichnet, dass**
  e) der Betragsmittelwert ($\overline{A}(f_i,t_j)$) als Funktion der Zeit t gleitend aus einem Datensatz ($\underline{A}(t)$) mit M Beträgen $A(t_m)$ mit Hilfe der Beziehung

$$\overline{A}(f_i, t) = (Q_\alpha(f_i, t) + Q_{1-\alpha}(f_i, t))/2$$

bestimmt wird, wobei $Q_\alpha$ und $Q_{1-\alpha}$ das $\alpha$- bzw. $(1-\alpha)$-Quantil der in einem Zeitabschnitt (T) jeweils bestimmten Beträge $A(f_i,t_m)$ mit $t_m$ $t+m\delta t$ ist, wobei m eine ganze Zahl ist.

9. Einrichtung nach Anspruch 8, bei dem der Zeitabschnitt (T) symmetrisch zum Zeitpunkt (t) angeordnet ist.

10. Einrichtung nach Anspruch 8 oder 9, mit einem in der Recheneinrichtung (12) implementierten Algorithmus zum Berechnen eines verbesserten Betragsmittelwertes ($\overline{A}_{opt}(f_i,t)$) aus dem Betragsmittelwert ($\overline{A}(f_i,t)$), indem für die Bestimmung der Quantilen diejenigen Beträge ($A(f_i,t_m)$) aus dem Datensatz ($\underline{A}(t)$) eliminiert werden, die den Betragsmittelwert ($\overline{A}(f_i,t)$) um einen vorgegebenen Differenzwert überschreiten.

**11.** Einrichtung nach einem der Ansprüche 8 bis 10, bei dem in der Recheneinrichtung (12) für jeden der vorgegebenen Para-meter ($f_i$) für eine Mehrzahl von aufeinanderfolgenden Zeitfenstern ($\Delta t$) die mittlere Abweichung ($s(f_i,t)$) der Beträge ($A(f_i,t_j)$) vom Betragsmittelwert ($\overline{A}(f_i,t)$) mit Hilfe der Beziehung

$$s(f_i,t) = \sqrt{\frac{Q_\alpha(f_i,\ t) - Q_{1-\alpha}(f_i,\ t)}{2q_{1-\alpha}}}$$

ermittelt wird, wobei $q_{1-\alpha}$ das $(1-\alpha)$-Quantil der normierten Normalverteilung ist, und mit dieser die normierte Abweichung der Beträge vom Betragsmittelwert ($\overline{A}(f_i,t)$) bestimmt wird, und zur Berechnung der Bewertungsfunktion ($K(t)$) herangezogen wird.

**12.** Einrichtung nach Anspruch 11 in Verbindung mit Anspruch 10, bei dem der vorgegebene Differenzwert ein Dreifacher der mittleren Abweichung ($s$) ist.

**Claims**

**1.** Method for detecting a pulsed mechanical effect on a plant component (2), in the case of which operating noise present in the plant component (2) is continuously sensed with the aid of a sensor (4) arranged on the plant component (2) and is converted by the latter into a measurement signal (M), **characterized by** the following method steps:

  a) in time windows ($\Delta t$) temporally following one another in time steps ($\delta t$) use is made of prescribed parameters ($f_i$) of a mathematical transformation rule to determine the magnitude ($A(f_i,t_j)$) of the transform of the measurement signal (M),
  b) the deviation of the magnitude ($A(f_i,t_j)$) from a mean magnitude ($\overline{A}(f_i,t)$) is determined for each time step ($\delta t$) and each of the prescribed parameters ($f_i$),
  c) an evaluation function ($K(t)$) is derived for each time step ($\delta t$) from the deviations determined for each of the prescribed parameters ($f_i$), and
  d) the evaluation function ($K(t)$) is compared with a threshold value ($K_0$), and the overshooting of the threshold value ($K_0$) is used as index for the presence of a pulsed signal component indicating the mechanical effect,
  **characterized in that**
  e) the mean magnitude ($\overline{A}(f_i,t_j)$ is determined as a function of time t in a sliding fashion from a data set ($\underline{A}(f_i,t)$) with M magnitudes $A(f_i,t_m)$ with the aid of the relationship

$$(\overline{A}(f_i,t)) = (Q_\alpha(f_i,t) + Q_{1-\alpha}(f_i,t))/2$$

  $Q\alpha$ and $Q_{1-\alpha}$ being the $\alpha$ and $(1-\alpha)$ quantiles, respectively, of the magnitudes $A(f_i,t_m)$ respectively determining time slice (T), and $t_m=t+m\delta t$ and m being an integer.

**2.** Method according to Claim 1, in which the time slice (T) is arranged symmetrically in relation to the instant t.

**3.** Method according to Claim 1 or 2, in which an improved mean magnitude ($\overline{A}_{opt}(f_i,t)$) is calculated from the mean magnitude ($\overline{A}(f_i,t)$) by eliminating for the determination of the quantiles those magnitudes ($A(f_i,t)$) from the data set which exceed the mean magnitude ($\overline{A}$) by a prescribed difference value.

**4.** Method according to Claim 1, 2 or 3, in which for each of the prescribed parameters ($f_i$) a mean deviation ($s(f_i,t)$) of the magnitudes ($A(f_i,t_j)$) from the mean magnitude ($\overline{A}(f_i,t)$) is determined for a plurality of consecutive time windows ($\Delta t$) with the aid of the relationship

$$s(f_i,t) = \sqrt{\frac{Q_\alpha(f_i,t) - Q_{1-\alpha}(f_i,t)}{2q_{1-\alpha}}}$$

$q_{1-\alpha}$ being the $(1-\alpha)$ quantile of the standardized normal distribution, and therewith the standardized deviation of the magnitudes from the mean magnitude $(\overline{A}(f_i,t))$ is determined and used to calculate the evaluation function $(K(t))$.

5. Method according to Claim 4 in conjunction with Claim 3, in which the prescribed difference value is three times the mean deviation (s).

6. Method according to either of Claims 4 and 5, in which there is formed for each time window $(\Delta t)$ the sum of the quadrature values of each standardized deviation over each of the prescribed parameters from which the evaluation function (K) is derived.

7. Method according to one of the preceding claims, in which the mathematical transformation rule is a windowed Fourier transform, and the parameters are frequencies $(f_i)$ of the frequency spectrum of the measurement signal (M).

8. Device for detecting a pulsed mechanical effect on a plant component (2), having at least a sensor (4), arranged on the plant component (2), for continuously sensing and measuring an operating noise present in the plant component (2), the device further comprising a computing device and an A/D converter (10), connected downstream of the sensor (4), for digitizing the measurement signals (M) sensed by the sensor (4), and for passing on the digitized measurement signals to the computing device (12), which is designed to carry out the following computational steps,

a) in time windows $(\Delta t)$ temporally following one another in time steps $(\delta t)$ use is made of prescribed parameters $(f_i)$ of a mathematical transformation rule to determine the magnitude $(A(f_i,t_j))$ of the transform of the measurement signal (M),

b) the deviation of the magnitude $(A(f_i,t_j))$ from a mean magnitude $(\overline{A}(f_i,t))$ is determined for each time step $(\delta t)$ and each of the prescribed parameters $(f_i)$,

c) an evaluation function $(K(t))$ is derived for each time step $(\delta t)$ from the deviations determined for each of the prescribed parameters $(f_i)$, and

d) the evaluation function $(K(t))$ is compared with a threshold value $(K_0)$, and the overshooting of the threshold value $(K_0)$ is used as index for the presence of a pulsed signal component indicating the mechanical effect,

**characterized in that**

e) the mean magnitude $(\overline{A}(f_i,t_j)$ is determined as a function of time t in a sliding fashion from a data set $(\underline{A}(t))$ with M magnitudes $A(t_m)$ with the aid of the relationship

$$(\overline{A}(f_i,t)) = (Q_\alpha(f_i,t) + Q_{1-\alpha}(f_i,t))/2$$

$Q_\alpha$ and $Q_{1-\alpha}$ being the $\alpha$ and $(1-\alpha)$ quantiles, of the magnitudes $A(f_i,t_m)$, where $t_m=t+m\delta t$, m being an integer.

9. Device according to Claim 8, in which the time slice (T) is arranged symmetrically in relation to the instant (t).

10. Device according to Claim 8 or 9, having an algorithm, implemented in the computing device (12), for calculating an improved mean magnitude $(\overline{A}_{opt}(f_i,t))$ from the mean magnitude $(\overline{A}(f_i,t))$, by eliminating for the determination of the quantiles those magnitudes $(A(f_i,t_m))$ from the data set $(\underline{A}(t))$ which exceed the mean magnitude $(\overline{A}(f_i,t))$ by a prescribed difference value.

11. Device according to one of Claims 8 to 10, in which for each of the prescribed parameters $(f_i)$ the mean deviation $(s(f_i,t))$ of the magnitudes $(A(f_i,t_j))$ from the mean magnitude $(\overline{A}(f_i,t))$ is determined in the computing device (12) for a plurality of consecutive time windows $(\Delta t)$ with the aid of the relationship

$$s(f_i,t) = \sqrt{\frac{Q_\alpha(f_i,t) - Q_{1-\alpha}(f_i,t)}{2q_{1-\alpha}}}$$

$q_{1-\alpha}$ being the (1-$\alpha$) quantile of the standardized normal distribution, and therewith the standardized deviation of the magnitudes from the mean magnitude ($\overline{A}(f_i,t)$) is determined and used to calculate the evaluation function (K(t)).

**12.** Device according to Claim 11 in conjunction with Claim 10, in which the prescribed difference value is three times the mean deviation (s).

**Revendications**

1. Procédé de détection d'un effet mécanique impulsionnel sur une partie d'installation (2), dans lequel un bruit de fonctionnement présent dans la partie d'installation (2) est détecté en continu avec un capteur (4) disposé sur la partie d'installation (2) et est converti par celui-ci en un signal de mesure (M), **caractérisé par** les étapes de procédé suivantes :

   a) dans des fenêtres temporelles ($\Delta t$) se succédant temporellement à intervalles de temps ($\delta t$), le montant (A ($f_i,t_j$)) de la transformée du signal de mesure (M) est déterminée avec les paramètres prescrits ($f_i$) d'une procédure de transformation mathématique,
   b) pour chaque intervalle de temps ($\delta t$) et chacun des paramètres prescrits ($f_i$), l'écart du montant (A($f_i,t_j$)) par rapport à une valeur moyenne de montant ($\overline{A}(f_i,t)$) est déterminé,
   c) d'après les écarts déterminés pour chacun des paramètres prescrits ($f_i$), une fonction d'évaluation (K(t)) est déduite pour chaque intervalle de temps ($\delta t$),
   d) la fonction d'évaluation (K(t)) est comparée avec une valeur seuil ($K_o$) et le dépassement de la valeur seuil ($K_o$) est invoqué comme indice de la présence d'une fraction de signal impulsionnelle indiquant l'effet mécanique,
   **caractérisé en ce que**
   e) la valeur moyenne de montant ($\overline{A}(f_i,t_j)$) est déterminée comme fonction du temps t lissé à partir d'un jeu de données (A($f_i,t$)) avec M montants A($f_i,t_m$) à l'aide de la relation :

$$\overline{A}(f_i,t) = (Q_\alpha(f_i,t) + Q_{1-\alpha}(f_i,t))/2$$

   dans lequel Q$\alpha$ et Q1-$\alpha$ est le quantile $\alpha$, respectivement (1-$\alpha$) des montants A ($f_i$, $t_m$) respectivement déterminés dans une période de temps (T), et dans lequel tm=t+m$\delta$t et m est un chiffre entier.

2. Procédé selon la revendication 1, dans lequel la période de temps (T) est disposée symétriquement au point temporel t.

3. Procédé selon les revendications 1 ou 2, dans lequel d'après la valeur moyenne de montant ($\overline{A}(f_i,t)$) une valeur moyenne de montant optimisée ($\overline{A}_{opt}(f_i,t)$) est calculée, en éliminant hors du jeux de données pour la détermination des quantiles les montants (A ($f_i,t$)), qui dépassent la valeur moyenne de montant ($\overline{A}$) d'une valeur différentielle prescrite.

4. Procédé selon les revendications 1,2 ou 3, dans lequel pour chacun des paramètres prescrits (fi) pour une pluralité de fenêtres temporelles ($\Delta t$) se succédant, un écart moyen (s($f_i$,t) des montants (A, $f_i$, t) par rapport à la valeur moyenne de montant ($\overline{A}(f_i,t)$) est déterminé à l'aide de la relation

$$s(f_i,t) = \sqrt{\frac{Q_\alpha(f_i, t) - Q_{1-\alpha}(f_i, t)}{2q_{1-\alpha}}}$$

dans lequel q1-$\alpha$ est le quantile (1-$\alpha$) de la distribution normale normalisée, et avec celui-ci l'écart normalisé des montants par rapport à la valeur moyenne de montant ($\overline{A}(f_i,t)$ est déterminé et est invoqué pour calculer la fonction d'évaluation (K(t)).

5. Procédé selon la revendication 4 en liaison avec la revendication 3, dans lequel la valeur différentielle prescrite est un triple de l'écart moyen (s).

6. Procédé selon une des revendications 4 ou 5, dans lequel pour chaque fenêtre temporelle ($\Delta t$) la somme des valeurs carrées de chaque écart normalisé est formée sur chacun des paramètres prescrits, d'après lequel la fonction d'évaluation (K) est déduite.

7. Procédé selon une des revendications précédentes, dans lequel la procédure de transformation mathématique est une transformation de Fourier fenêtrée et les paramètres sont des fréquences (fi) du spectre de fréquence du signal de mesure (M).

8. Dispositif de détection d'un effet mécanique impulsionnel sur une partie d'installation (2), comportant au moins un capteur (4) disposé sur la partie d'installation (2) pour détecter et mesurer en continu un bruit de fonctionnement présent dans la partie d'installation (2), dans lequel le dispositif comprend en outre un dispositif informatique ainsi qu'un convertisseur A/N (10) branché en aval pour numériser les signaux de mesure (M) détectés par le capteur et pour transmettre les signaux de mesure numérisés à un dispositif informatique (12), qui est réalisé afin de mettre en oeuvre les étapes de calcul suivantes :

   a) dans des fenêtres temporelles ($\Delta t$) se succédant temporellement à intervalles de temps ($\delta t$), le montant (A($f_i,t_j$)) de la transformée du signal de mesure (M) est déterminée avec les paramètres prescrits (fi) d'une procédure de transformation mathématique,
   b) pour chaque intervalle de temps ($\delta t$) et chacun des paramètres prescrits ($f_i$), l'écart du montant (A($f_i,f_t$)) par rapport à une valeur moyenne de montant ($\overline{A}(f_i,t)$) est déterminé,
   c) d'après les écarts déterminés pour chacun des paramètres prescrits (fi), une fonction d'évaluation (K(t)) est déduite pour chaque intervalle de temps ($\delta t$),
   d) la fonction d'évaluation (K(t)) est comparée avec une valeur seuil (Ko) et le dépassement de la valeur seuil (Ko) est invoqué comme indice de la présence d'une fraction de signal impulsionnelle indiquant l'effet mécanique, **caractérisé en ce que**
   e) la valeur moyenne de montant ($\overline{A}$' $f_i$, $t_j$) est déterminée comme fonction du temps t lissé à partir d'un jeu de données (A(t)) avec M montants A($t_m$) à l'aide de la relation :

$$\overline{A}(f_i,t) = (Q_\alpha(f_i,t) + Q_{1-\alpha}(f_i,t))/2$$

   dans lequel Q$\alpha$ et Q1-$\alpha$ est le quantile $\alpha$, respectivement (1-$\alpha$) des montants A(fi) avec tm=t+m$\delta$t respectivement déterminés dans une période de temps (T), dans lequel m est un chiffre entier.

9. Dispositif selon la revendication 8, dans lequel la période de temps (T) est disposée symétriquement au point temporel (t).

10. Dispositif selon les revendications 8 ou 9, comportant un algorithme implémenté dans le dispositif informatique (12) pour calculer une valeur moyenne de montant optimisée ($\overline{A}_{opt}(f_i,t)$) d'après la valeur moyenne de montant ($\overline{A}(f_i,t)$), en éliminant hors du jeu de données (A(t)) pour la détermination des quantités les montants (A($f_i,t_m$), qui dépassent la valeur moyenne de montant ($\overline{A}(f_i,t)$) d'une valeur différentielle prescrite.

11. Dispositif selon une des revendications 8 à 10, dans lequel dans le dispositif informatique (12) pour chacun des paramètres prescrits (fi) pour une pluralité de fenêtres temporelles ($\Delta t$) se succédant, l'écart moyen (s($f_i,t$)) des montants (A($f_i,t_j$) par rapport à la valeur moyenne de montant ($\overline{A}(f_i,t)$) est déterminé à l'aide de la relation

$$s(f_i, t) = \sqrt{\frac{Q_\alpha(f_i, t) - Q_{1-\alpha}(f_i, t)}{2q_{1-\alpha}}}.$$

dans lequel $q_{1-\alpha}$ est le quantile $(1-\alpha)$ de la distribution normale normalisée, et avec celui-ci l'écart normalisé des montants par rapport à la valeur moyenne de montant ($\overline{A}(f_i,t)$ est déterminé et est invoqué pour calculer la fonction d'évaluation ($K(t)$).

12. Dispositif selon la revendication 11 en liaison avec la revendication 10, dans lequel la valeur différentielle prescrite est un triple de l'écart moyen ($s$).

## FIG 1

## FIG 2

FIG 3

FIG 4

## FIG 5

$A(f_i)$

$T$

$A(f_i, t_0 + j\delta t)$

$A(f_i, t_0)$

$A(f_i, t_m)$

$t_1 - \frac{M-1}{2}\delta t$    $\delta t$    $t_1$    $t_1 + \frac{M-1}{2}\delta t$    $t$

$$t = t_1 : \quad \underline{A}(f_i, t_1) = \left( A\left(f_i, t_1 - \frac{M-1}{2}\delta t\right), \ A\left(f_i, t_1 - \frac{M-3}{2}\delta t\right), \ldots A\left(f_i, t_1 + \frac{M-1}{2}\delta t\right) \right)$$

## FIG 6

$\overline{A}(f_i)$

$\overline{A}(f_i, t_1)$

$\delta t$    $t_1$    $t$

FIG 7

FIG 8

EP 1 979 724 B1

FIG 9

20

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- EP 0765466 B1
- DE 19857552 A1
- DE 19843615 C2
- DE 19727114 C2
- DE 19545008 C2

- US 4888948 A
- DD 224934 A1
- WO 0175272 A2
- WO 03071243 A1
- WO 03071243 A